# EUROPÄISCHE PATENTSCHRIFT

(11) **EP 2 244 870 B1**
(45) Veröffentlichungstag und Bekanntmachung des Hinweises auf die Patenterteilung: **12.08.2015**
(21) Anmeldenummer: 08868453.5
(22) Anmeldetag: 19.12.2008
(51) Int. Cl.: B22C 9/18, B29C 33/64, B22C 1/14

(54) **HERSTELLUNG VON FORMTEILEN FÜR GIESSEREIZWECKE**
PRODUCTION OF MOLDED PARTS FOR CASTING PURPOSES
FABRICATION DE PARTIES DE MOULE À DES FINS DE COULÉE

(30) Priorität: 21.12.2007 DE 102007063552; 20.03.2008 DE 102008015966
(43) Veröffentlichungstag der Anmeldung: 03.11.2010
(73) Patentinhaber: ITN Nanovation AG, 66117 Saarbrücken (DE); ASK Chemicals GmbH, 40721 Hilden (DE)
(72) Erfinder: GÖBBERT, Christian, 63863 Eschau (DE); HANISCH, Michael, 66583 Spiesen-Elversberg (DE); HOFMANN, Volker, 66809 Nalbach (DE); MEYER, Frank, 66111 Saarbrücken (DE); NONNINGER, Ralph, 66119 Saarbrücken (DE); REHSE, Henning, 42929 Wermelskirchen (DE); JUNDT, Magnus, 83395 Freilassing (DE); PRIEBE, Christian, 42489 Wülfrath (DE); SCHAFFER, Gunther, 40597 Düsseldorf (DE)
(74) Vertreter: Patentanwälte Ruff, Wilhelm, Beier, Dauster & Partner
(86) Internationale Anmeldenummer: PCT/EP2008/010971
(87) Internationale Veröffentlichungsnummer: WO 2009/083201

(56) Entgegenhaltungen:
- EP-A1- 1 964 891
- WO-A-2006/044507
- US-A- 5 219 925
- US-A- 5 601 641
- US-B1- 6 322 850

## Beschreibung

Die vorliegende Erfindung betrifft ein Verfahren zur Herstellung von Maskenformen und Kernen für Gießereizwecke.

In der Gießereitechnik werden hitzebeständige Formen benötigt, die insbesondere aus einem körnigen, feuerfesten Material und einem Bindemittel hergestellt werden können.

Als Formen werden für Gießereizwecke häufig Maskenformen verwendet, die nach dem sogenannten Croning-Verfahren (benannt nach seinem Erfinder Johannes Croning) hergestellt werden können. In der Regel bestehen Maskenformen aus zwei Hälften, die zusammengefügt eine der Modellkontur entsprechende Formstoffschale bilden. Maskenformen bzw. deren Teile werden bevorzugt aus Gemischen von Sand und Kunstharz unter Verwendung beheizter Modelleinrichtungen hergestellt. Das Gemisch wird in ein Hohlmodell eingebracht, dessen Innenhohlraum die Konturen aller Flächen der herzustellenden Form bzw. des herzustellenden Teils der Form bestimmt. Durch die Wärmeeinwirkung beim Formen härtet der Kunstharzbinder aus und es entsteht eine selbsttragende, maskenartige Form von vorzugsweise geringer Dicke, die die Außenkontur des zu gießenden Produkts definiert. Beim anschließenden Gießprozeß kann diese Form z.B. mit einem Granulat hinterfüllt werden.

Zu Herstellung von Hohlräumen im Inneren von Gießereiprodukten werden Kerne benötigt, die man innerhalb einer Gießform anordnen kann und deren äußere Form der Innenkontur des zu gießenden Produkts entspricht. Der Kern ist also ggf. ein Bestandteil einer Form. Im Anschluss an das Gießen kann der Kern wieder aus dem gegossenen Produkt entfernt (herausgelöst) werden.

Wie die Maskenformen werden auch Kerne üblicherweise aus einem körnigen, feuerfesten Material und einem Bindemittel hergestellt. Dazu kann beispielsweise beim sogenannten Kernschießverfahren mit Bindemittel versetzter Sand (sogenannter Kernsand) unter definiertem Druck und definierter Temperatur in einen Kernkasten (eine Vorrichtung, die in der Regel aus zwei Formteilen bzw. Formhälften besteht, die im Gebrauchszustand mindestens einen Innenhohlraum in Form des zu fertigenden Kerns - ein sogenanntes Formnest - einschliessen) eingebracht werden. Nach dem Aushärten des Bindemittels kann der fertige Kern (der aufgrund seiner Zusammensetzung üblicherweise als Sandkern bezeichnet wird) aus dem Kernkasten entnommen und bestimmungsgemäß verwendet werden.

Da es bei der Herstellung von Metallgußprodukten nicht zu chemischen Reaktionen zwischen dem flüssigen Metall und der Form kommen darf, müssen Maskenformen und Kerne üblicherweise aus sehr hochwertigen Materialien, z.B. aus reinem Quarzsand, gefertigt werden. Die Korngröße der Materialien wird dabei vorzugsweise so gewählt, dass die Oberflächen der gegossenen Produkte nicht zu rau werden.

Als Bindemittel werden in der Regel organische Bindemittel wie z.B. flüssige Phenol-, Furan-, und Aminoharze (oder eine Kombination daraus) verwendet. Unter Zusatz eines Härters wie zum Beispiel Ammoniumstearat kann eine damit hergestellte Mischung mit einem geeigneten körnigen, feuerfesten Material bei Temperaturen zwischen 200 °C und 270° C in sehr kurzer Zeit aushärten. Allerdings kommen in letzter Zeit verstärkt auch anorganische Bindemittel zum Einsatz. Als solche kommen kommen insbesondere Wasserglas, Magnesiumsulfat, Natriumphosphat, Tone, Montmorillonit, Glaukonit, Kaolin, Aerogele, Zement oder auch Gips in Frage. Daneben sind allgemein auch Schichtmineralien, insbesondere Schichtsilikate, als anorganische Bindemittel geeignet. Sowohl bei der Verwendung von organischen als auch von anorganische Bindemitteln treten jedoch häufig Probleme auf. So kommt es häufig zu Anhaftungen des Gemisches aus dem körnigen, feuerfesten Material und dem Bindemittel an den Wänden der oben erwähnten Innenhohlräume. Über die Zeit entstehen so immer dicker werdende Anbackungen, die dazu führen, dass es zu Formkörperungenauigkeiten kommt, die sich später in dem fertigen Gußprodukt widerspiegeln.

Es ist bekannt, derartige Anhaftungen beziehungsweise Anbackungen mit Hilfe sogenannter Quickpads zu vermeiden. Bei einem Quickpad handelt es sich um einen Antihaftaufkleber, der beispielsweise auf einer Teflonschicht basieren kann. Dieser muss manuell in die Innenhohlräume eingeklebt und bei nachlassender Wirkung wieder entfernt und ersetzt werden, was mit relativ hohem Aufwand verbunden ist. Darüber hinaus können derartige Quickpads nur begrenzt eingesetzt werden, da gegebenenfalls die in manchen Bereichen der Innenhohlräume auftretenden sehr komplexen Konturen ihren Einsatz unmöglich machen. Ausserdem sind Quickpads thermisch nur begrenzt belastbar und deshalb für den Einsatz in heißaushärtenden Verfahren ungeeignet.

Alternativ zum Quickpad ist es bekannt, Einmaltrennmittel, insbesondere auf Wachsbasis zu verwenden. Derartige Trennmittel legen sich als Flüssigkeitsfilm auf Wände der Innenhohlräume. Gerade in kritischen Bereichen bleiben sie jedoch häufig wirkungslos, da das Gemisch aus dem körnigen, feuerfesten Material und dem Bindemittel häufig unter hohem Druck in Hohlmodelle und Kernformen eintritt und das Trennmittel dabei mechanisch abgewaschen wird.

Aus der EP 1 964 891 A1 ist ein Formtrennmittel bekannt, das ein Polysiloxan und einen Vernetzer aufweist. Bei dem Formtrennmittel handelt es sich bevorzugt um ein Polydialkylsiloxan, bei dem Vernetzer um eine Verbindung, bei der ein Siliziumatom vier verschiedene Substituenten (R, P, Q, T) aufweist und wobei R ein H-Atom, ein C1 2-Alkyl oder ein C2 6-Alkyl ist und P, Q und T jeweils unabhängig voneinander ein H-Atom, eine Alkoxy-Gruppe, eine Acetoxy-Gruppe oder ein Halogen-Atom sein können. Als Lösungsmittel enthält das Formtrennmittel Wasser.

Aus den Dokumenten US 5601641 A, US 6322850 A und US 5219925 A sind Antihaftzusammensetzungen bekannt, mit denen Formen beschichtet werden können, um Gussstücke nach dem Guss leichter aus der Form lösen zu können. Die Entgegenhaltungen befassen sich jedoch nicht mit der Herstellung von Sandkernen, sondern stattdessen mit der Herstellung von Formteilen aus Kunststoffen.

Die WO 2006/044507 A1 betrifft eine sogenannte "release agent composition", die das Herauslösen von Sandkernen aus Kernkästen erleichtern soll. Diese Zusammensetzung enthält ein vernetzbares Fluorotelomer, ein "moisture curable silicone", einen Katalysator und ein Lösungsmittel.

Der vorliegenden Erfindung liegt die Aufgabe zugrunde, eine verbesserte technische Lösung zur Herstellung von Maskenformen und Kernen, für Gießereizwecke bereitzustellen, bei der die oben genannten Probleme nicht auftreten.

Diese Aufgabe wird gelöst durch das Verfahren zur Herstellung von Formen für Gießereizwecke mit den Merkmalen des Anspruchs 1. Bevorzugte Ausführungsformen des erfindungsgemäßen Verfahrens sind in den abhängigen Ansprüchen 2 bis 7 definiert.

Ein erfindungsgemäßes Verfahren dient zur Herstellung von Maskenformen und Kernen für Gießereizwecke. Mit Hilfe des erfindungsgemäßen Verfahrens lassen sich also sowohl Formen herstellen, die die Aussenkontur eines zu gießenden Produkts festlegen als auch solche, die zur Schaffung eines Hohlraumes eingesetzt werden können (Kerne). Bei dem Verfahren wird eine Zusammensetzung aus einem körnigen, feuerfesten Material und einem Bindemittel in ein Hohlmodell eingebracht, insbesondere eingeblasen. Nach dem Einbringen wird das Bindemittel in der Regel unmittelbar ausgehärtet, woraufhin die hergestellten Formen entnommen werden können. Der Innenhohlraum des Hohlmodells bzw. dessen Form bestimmt dabei die Konturen aller Flächen der herzustellenden Form bzw. des herzustellenden Kerns. Das Modell selbst besteht aus mindestens zwei voneinander trennbaren Teilen, um die Entnahme der Form zu ermöglichen. Zur Herstellung von Sandkernen bedient man sich vorzugsweise eines üblichen Formkastens oder einer üblichen Formbüchse, wie sie dem Fachmann hinlänglich bekannt sind.

Besonderes zeichnet sich ein erfindungsgemäßes Verfahren zur Herstellung von Formen für Gießereizwecke dadurch aus, dass auf mindestens eines der voneinander trennbaren Teile vor seiner Verwendung eine Zusammensetzung aufgebracht wird, die mindestens eine siliziumorganische Komponente und ein organisches Lösungsmittel enthält.

Ein Verfahren zur Herstellung von Kernen für Gießereizwecke umfasst bevorzugt die Schritte
- Einbringen, insbesondere Einschießen, einer Zusammensetzung enthaltend ein körniges, feuerfestes Material und ein Bindemittel (vorzugsweise besteht die Zusammensetzung im wesentlichen aus dem körnigen, feuerfesten Material und dem Bindemittel) durch mindestens eine Zufuhröffnung in den Innenhohlraum,
- Aushärten des Bindemittels und
- Entnahme der Form.

Die Zusammensetzung mit der siliziumorganischen Komponente wird bevorzugt derart aufgebracht, dass die Wände des Innenhohlraums mindestens teilweise, vorzugsweise vollständig, mit der Schicht oder Beschichtung bedeckt sind. Insbesondere wird die Zusammensetzung in den Bereichen aufgebracht, die beim Einbringen der Zusammensetzung aus dem körnigen, feuerfesten Material und dem Bindemittel mechanisch besonders stark belastet werden, also insbesondere die Bereiche, die der mindestens einen Zufuhröffnung gegenüberliegen, auf die die Zusammensetzung beim Einschießen also unmittelbar auftrifft.

Das Aufbringen der Zusammensetzung erfolgt bevorzugt durch Aufsprühen oder ein Tauchverfahren. Natürlich muss jeweils eine Zusammensetzung mit geeigneter Konsistenz verwendet werden. Die dafür benötigten sowie sonstige Eigenschaften der Zusammensetzung können durch Zugabe entsprechender Additive wie Verdicker, Rheologieadditive etc. eingestellt werden. Geeignete Additive sind dem Fachmann bekannt und benötigen an dieser Stelle keiner detaillierten Erläuterung.

Unmittelbar nach dem Aufbringen kann die Zusammensetzung mit der siliziumorganischen Komponente ausgehärtet werden. Vorzugsweise erfolgt das Aushärten der Zusammensetzung im Rahmen des erfindungsgemäßen Verfahrens thermisch, bevorzugt bei Temperaturen zwischen Raumtemperatur und 350 °C, besonders bevorzugt zwischen 20 °C und 300 °C, insbesondere zwischen 30 °C und 200 °C.

Bevorzugt umfasst die Zusammensetzung in diesem Fall mindestens einen thermisch vernetzbaren Bestandteil. Bei diesem kann es sich insbesondere auch um die mindestens eine siliziumorganische Komponente handeln.

In einer weiteren bevorzugten Ausführungsform des erfindungsgemäßen Verfahrens kann das Aushärten auch mittels elektromagnetischer Strahlung erfolgen. Besonders bevorzugt ist dabei der Einsatz von Strahlung mit Wellenlängen im UV- und/oder IR-Bereich.

In diesem Fall umfasst die Zusammensetzung bevorzugt mindestens einen durch Strahlung vernetzbaren Bestandteil. So kann beispielsweise die mindestens eine siliziumorganische Komponente durch Strahlung vernetzbare Seitenketten (insbesondere mit ethylenischen Doppelbindungen) aufweisen.

Grundsätzlich ist es auch möglich, dass sowohl thermisch als auch mit Strahlung ausgehärtet wird. So können in der Zusammensetzung sowohl thermisch als auch durch Strahlung vernetzbare Komponenten enthalten sein, wobei es sich dann durchaus nicht bei allen Komponenten um siliziumorganische Komponenten handeln muss. So können beispielsweise auch Polyesterharze als Bestandteil der Zusammensetzung bevorzugt sein.

Die so hergestellte siliziumorganische Schicht oder Beschichtung hat eine hervorragende Trennfunktion, sie unterbindet wirksam einen unmittelbaren Kontakt der Zusammensetzung aus dem körnigen, feuerfesten Material und dem Bindemittel zumindest mit den kritischen Wandbereichen des Innenhohlraums. Die Schicht oder Beschichtung lässt sich daher auch als Trennschicht bezeichnen. Sie weist eine hohe Nicht-Benetzbarkeit auf. Darüber hinaus zeichnet sie sich insbesondere durch eine ausserordentlich hohe Abrasionsstabilität und sehr gute Haftungseigenschaften aus.

Bei dem körnigen, feuerfesten Material handelt es sich im Übrigen um Sand, insbesondere um Quarzsand.

Als Bindemittel für das körnige, feuerfeste Material können die eingangs erwähnten organischen Bindemittel verwendet werden. Allerdings sind auch anorganische Bindemittel einsetzbar, ggf. in Kombination mit einem oder mehreren organischen Bindemitteln. Als anorganisches Bindemittel kommen insbesondere Wasserglas, Magnesiumsulfat, Natriumphosphat, Tone, Montmorillonit, Glaukonit, Kaolin, Aerogele, Zement, Gips, Schichtmineralien wie Schichtsilikate und Kombinationen der genannten Komponenten in Betracht.

Als siliziumorganische Komponente enthält die Zusammensetzung mit der mindestens einen siliziumorganischen Komponente stets ein Polydialkylsiloxan, insbesondere Polydimethylsiloxan. Diese sollten jeweils vernetzbare Gruppen aufweisen. Hierbei kann es sich beispielsweise um Gruppen wie freie Hydroxy-Gruppen handeln, die eine Kondensationsreaktion eingehen können oder z.B um Alkoxy-Gruppen, aus denen freie Hydroxy-Gruppen gebildet werden können.

Weiterhin kann es bevorzugt sein, dass die Zusammensetzung weitere siliziumorganische Komponenten aufweist, insbesondere Alkoxysilane sind bevorzugt enthalten. Unter den besonders bevorzugten Alkoxysilanen sind insbesondere Alkylalkoxysilane wie Trimethylethoxysilan oder Trimethylmethoxysilan zu nennen.

Neben der mindestens einen vernetzbaren siliziumorganischen Komponente kann eine erfindungsgemäß einsetzbare Zusammensetzung auch mindestens eine weitere vernetzbare organische Komponente nichtsiliziumorganischer Natur, insbesondere eine Polyesterkomponente, umfassen.

Es kann weiterhin bevorzugt sein, dass die Zusammensetzung mit der mindestens einen siliziumorganischen Komponente ein oder mehrere Trennmittel, insbesondere mindestens ein Trennöl, aufweist. Bevorzugt handelt es sich bei dem Trennmittel um ein lineares oder verzweigtes Polysiloxan, insbesondere ein Polysiloxan der Formel RO-[R'₂Si-O]ₙ-R, wobei R und R' unabhängig voneinander für einen Alkylrest mit 1 bis 8 C-Atomen oder einen aromatischen Rest mit 6 bis 20 C-Atomen stehen.

In weiteren bevorzugten Ausführungsformen können in der Zusammensetzung mit der mindestens einen siliziumorganischen Komponente auch anorganische Partikel enthalten sein, insbesondere solche mit Korngrößen im Bereich Nanometer bis Mikrometer. Die Beschaffenheit der anorganischen Partikel ist nicht kritisch, grundsätzlich sind alle keramischen Partikel geeignet. Besonders bevorzugt handelt es sich dabei jedoch um Silikatpartikel. Überraschenderweise wurde gefunden, dass die Anwesenheit derartiger Partikel die Abrasionsstabilität der Trennschicht deutlich erhöht.

Als weitere Komponenten weist die Zusammensetzung mit der mindestens einen siliziumorganischen Komponente als Vernetzer geeignete Komponenten auf. Gängige Vernetzer sind dem Fachmann bekannt. Vorliegend werden Triethoxysilan (TEOS) oder Triacetoxymethylsilan eingesetzt.

Zusätzlich zu dem Vernetzer oder alternativ dazu kann eine erfindungsgemäß verwendbare Zusammensetzung auch noch einen Katalysator, insbesondere mindestens einen Kondensationskatalysator, aufweisen. Dabei kann es sich beispielsweise um eine Säure wie Salzsäure oder Schwefelsäure handeln.

Bei dem oben erwähnten Lösungsmittel handelt es sich um ein organisches Lösungsmittel, insbesondere um mindestens einen Alkohol, Ether und/oder Ester. Auch unpolare Lösungsmittel wie Benzin sind einsetzbar. Die Beschaffenheit des Lösungsmittel ist jedoch grundsätzlich nicht erfindungswesentlich.

Zur Durchführung des erfindungsgemäßen Verfahrens eignet sich eine Vorrichtung, die mindestens ein Teil aufweist, das mit einer siliziumorganischen Schicht oder Beschichtung, insbesondere mit einer gehärteten siliziumorganischen Schicht oder Beschichtung, versehen ist, die aus der beschriebenen Zusammensetzung enthaltend die mindestens eine siliziumorganische Komponente und das mindestens ein Lösungsmittel hergestellt wurde.

In bevorzugten Ausführungsformen weist die Schicht oder Beschichtung eine Dicke zwischen 1 µm und 100 µm, insbesondere zwischen 1 µm und 20 µm, auf.

Das mindestens eine Teil besteht vorzugsweise mindestens teilweise, in bevorzugten Ausführungsformen auch vollständig, aus Metall und/oder aus Kunststoff.

Besonders bevorzugt ist die Schicht oder Beschichtung permanent oder zumindest semi-permanent an das mindestens eine Teil der Form gebunden. Die Bindung ist dabei in bevorzugten Ausführungsformen so fest, dass die Schicht nicht zerstörungsfrei abgelöst werden kann. Die Schicht oder Beschichtung bildet auf der Oberfläche des mindestens einen Teils eine siliziumorganische Matrix aus, in die in bevorzugten Ausführungsformen anorganische Partikel eingelagert sein können.

## Patentansprüche

1. Verfahren zur Herstellung von Maskenformen und Kernen für Gießereizwecke unter Verwendung einer Zusammensetzung aus Sand und einem Bindemittel" wobei die Zusammensetzung in ein Hohlmodell eingebracht wird, dessen Innenhohlraum die Konturen aller Flächen der herzustellenden Form oder des herzustellenden Teils der Form bestimmt, wobei das Modell aus mindestens zwei voneinander trennbaren Teilen besteht, um die Entnahme der hergestellten Form zu ermöglichen, und wobei auf mindestens eines der voneinander trennbaren Teile vor seiner Verwendung eine Zusammensetzung aufgebracht wird, die als Lösungsmittel ein organisches Lösungsmittel sowie ein Polydialkylsiloxan als siliziumorganische Komponente und Triethoxysilan oder Triacetoxymethylsilan als Vernetzer enthält.

2. Verfahren nach Anspruch 1, wobei die Zusammensetzung mit der siliziumorganischen Komponente nach dem Einbringen in den Innenhohlraum ausgehärtet wird.

3. Verfahren nach einem der Ansprüche 1 oder 2, wobei die Zusammensetzung neben der siliziumorganischen Komponente mindestens eine weitere vernetzbare organische Komponente nichtsiliziumorganischer Natur, insbesondere eine Polyesterkomponente, umfasst.

4. Verfahren nach einem der vorhergehenden Ansprüche, wobei die Zusammensetzung mindestens ein Trennmittel, insbesondere mindestens ein Trennöl, aufweist.

5. Verfahren nach Anspruch 4, wobei die Zusammensetzung als Trennmittel ein lineares oder verzweigtes Polysiloxan, insbesondere ein Polysiloxan der Formel RO-[R'₂Si-O]ₙ-R, wobei R und R' unabhängig voneinander für einen Alkylrest mit 1 bis 8 C-Atomen oder einen aromatischen Rest mit 6 bis 20 C-Atomen stehen, aufweist.

6. Verfahren nach einem der vorhergehenden Ansprüche, wobei die Zusammensetzung anorganische Partikel aufweist, insbesondere mit Partikelgrößen im nanoskaligen Bereich.

7. Verfahren nach Anspruch 6, wobei es sich bei den Partikeln um Silikatpartikel handelt.

## Claims

1. A process for producing mask molds and cores for foundry purposes using a composition composed of sand and a binder, wherein the composition is introduced into a hollow model whose interior cavity determines the contours of all surfaces of the mold to be produced or of the mold part to be produced, wherein the model consists of at least two parts which can be separated from one another in order to permit removal of the mold produced, and wherein a composition is applied to at least one of the separable parts before use, the composition containing as a solvent an organic solvent and a polydialkylsiloxane as a organosilicon component and triethoxysilane or triacetoxymethylsilane as a crosslinker.

2. The process according to claim 1, wherein the composition comprising the organosilicon component is cured after introduction into the interior cavity.

3. The process according to any one of claims 1 or 2, wherein the composition comprises in addition to the organosilicon component at least one further crosslinkable organic component of non-organosilicon type, in particular a polyester component.

4. The process according to any one of the preceding claims, wherein the composition includes at least one release agent, in particular at least one release oil.

5. The process according to claim 4, wherein the composition includes a linear or branched polysiloxane, in particular a polysiloxane of the formula RO-[R'₂Si-O]ₙ-R, where R and R' are each, independently of one another, an alkyl radical having from 1 to 8 carbon atoms or an aromatic radical having from 6 to 20 carbon atoms, as a release agent.

6. The process according to any one of the preceding claims, wherein the composition includes inorganic particles, in particular having particle sizes in the nanosize range.

7. The process according to claim 6, wherein the particles are silicate particles.

## Revendications

1. Procédé de fabrication de moules carapaces et de noyaux à des fins de coulée en utilisant une composition constituée de sable et d'un liant, la composition étant introduite dans un modèle creux dont la cavité intérieure détermine les contours de toutes les surfaces du moule à fabriquer ou de la partie du moule à fabriquer, le modèle étant constitué d'au moins deux parties séparables les unes des autres pour permettre l'extraction du moule fabriqué, et une composition qui contient en tant que solvant un solvant organique et un polydialkylsiloxane en tant que composant organique de silicium et du triéthoxysilane ou du triacétoxyméthylsilane en tant qu'agent de réticulation étant appliquée sur au moins une des parties séparables les unes des autres avant son utilisation.

2. Procédé selon la revendication 1, dans lequel la composition contenant le composant organique de silicium est durcie après l'introduction dans la cavité intérieure.

3. Procédé selon l'une quelconque des revendications 1 ou 2, dans lequel la composition comprend en plus du composant organique de silicium au moins un autre composant organique réticulable qui n'est pas de nature organique de silicium, notamment un composant polyester.

4. Procédé selon l'une quelconque des revendications précédentes, dans lequel la composition comprend au moins un agent de démoulage, notamment au moins une huile de démoulage.

5. Procédé selon la revendication 4, dans lequel la composition comprend en tant qu'agent de démoulage un polysiloxane linéaire ou ramifié, notamment un polysiloxane de formule RO-[R'₂Si-O]ₙ-R_{,} R et R' représentant indépendamment l'un de l'autre un radical alkyle de 1 à 8 atomes C ou un radical aromatique de 6 à 20 atomes C.

6. Procédé selon l'une quelconque des revendications précédentes, dans lequel la composition comprend des particules inorganiques, notamment ayant des tailles de particules dans la plage nanométrique.

7. Procédé selon la revendication 6, dans lequel les particules sont des particules de silicate.
